# EUROPEAN PATENT SPECIFICATION

(11) **EP 4 401 003 B1**
(45) Date of publication and mention of the grant of the patent: **11.03.2026**
(21) Application number: 23151244.3
(22) Date of filing: 12.01.2023
(51) Int. Cl.: G06K 7/10, H04B 5/00, H04L 27/00, H02J 50/20

(54) **PULSE DENSITY MODULATING TRANSMITTER FOR RFID**
SENDER ZUR PULSDICHTEMODULATION FÜR RFID
EMETTEUR À MODULATION DE DENSITÉ D'IMPULSIONS POUR RFID

(43) Date of publication of application: 17.07.2024
(73) Proprietor: Renesas Design Austria GmbH, 8041 Graz (AT)
(72) Inventor: Ellwood, Stephen, 8041 Graz (AT); Jongsma, Jakob, 8041 Graz (AT)
(74) Representative: Schwarz & Partner Patentanwälte GmbH

(56) References cited:
- WO-A1-2007/085788
- US-A1- 2007 123 184
- US-B1- 6 681 101

## Description

### FIELD OF THE INVENTION

The present invention relates to a transmitter built to drive an RFID antenna of the transmitter with an antenna signal with a substantial sinusoidal current/voltage and a carrier frequency in the RFID frequency range of 100kHz to 100MHz, which transmitter comprises:
a power amplifier built to provide an amplified transmitter signal and
an electromagnetic interference filter built to filter the amplified transmitter signal and built to provide a filtered transmitter signal and
a matching circuit connected to the electromagnetic interference filter and the RFID antenna and built to match their impedances and built to receive the filtered transmitter signal and built to provide the antenna signal to the RFID antenna.

### BACKGROUND OF THE INVENTION

High-voltage digital power amplifiers or class D amplifiers like AMS AS3911 are known and used in radio frequency identification (RFID) devices like RFID readers or transmitters to communicate with active or passive transponders. In a typical application a passive transponder or tag stores product identification of a product to which it is attached and the reader is used to obtain this product information. The reader is powered and generates a magnetic field emitted by its RFID antenna. When the reader and the tag are within close proximity of each other, the reader generated magnetic field is induced into the RFID antenna of the tag and used to power the passive tag. The tag also has a transceiver to receive the signal from the reader and to transmit a response back to the reader.

There are standards like ISO/IEC18000-3 or ISO/IEC 14.443 Type A and B or ISO15.693 or ECMA-340 13,56 MHz Near Field Communication (NFC) or company standards like Felica from company Sony that define protocols and types of modulation used to transmit information between the tag and the reader. Some or all of these standards define that the reader transmits digital data to the tags as an analogue signal by changing the magnitude of its transmitted power. The power amplifier is used to process the digital data in a low voltage (typ. 3,6V or 5V) domain into an amplified analogue signal with the carrier frequency to drive the RFID antenna in resonance to output maximal power of the substantial sinusoidal output current. The substantial sinusoidal output current of the output signal is needed to satisfy the spurious emission levels required by regulations to avoid noise in other frequency ranges.

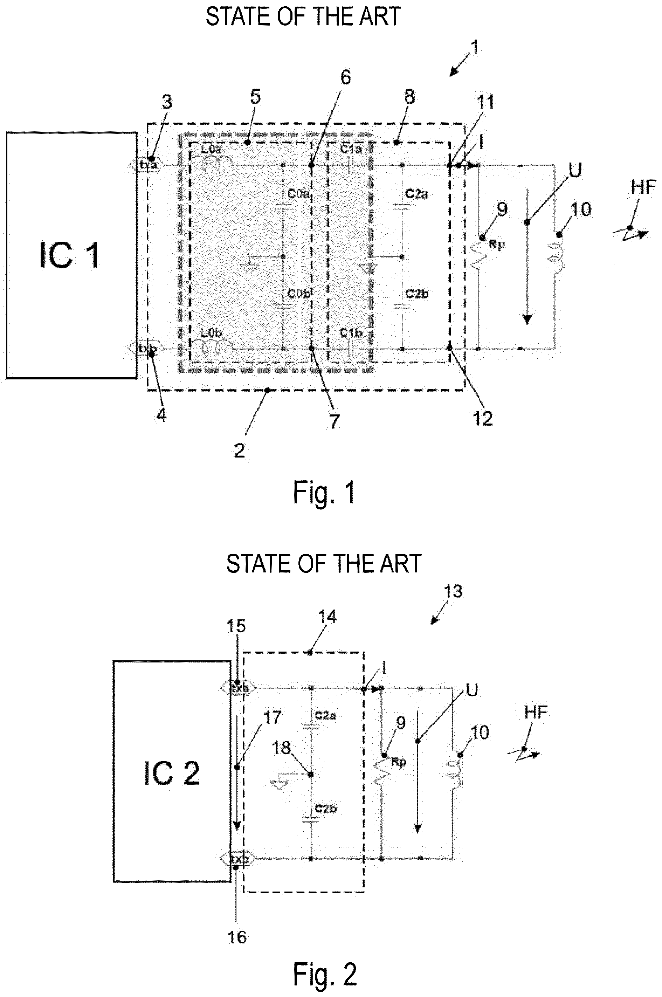

Figure 1 shows the transmission part of a state of the art high-voltage digital power amplifier 1 within a reader or transmitter that comprises an integrated circuit IC1 that processes digital data to be transmitted to a tag or may be used for wireless charging of a battery of a receiver. A filter 2 realized with discrete components is connected to a first transmission output pin 3 and a second transmission output pin 4 to filter harmonics of the differential square wave digital output signal of the integrated circuit IC1 and to feed an antenna signal with a carrier frequency in resonance with a substantial sinusoidal current I to RFID antenna 10. The digital data realize an amplified transmitter signal of the integrated circuit IC1 and are provided as 0 Volt for bit "0" or "low" and 3,6 Volt to 5 Volt for bit "1" or "high" between the first transmission output pin 3 and the second transmission output pin 4 of the integrated circuit IC1. An electromagnetic interference filter 5 of filter 2 is connected to the transmission output pins 3 and 4 to filter the rectangular digital output signal into a substantial sinusoidal signal provided at output connections 6 and 7 of the electromagnetic interference filter 5. A matching circuit 8 is connected to the output connections 6 and 7 of the electromagnetic interference filter 5 and an Ohmic resistance 9 is arranged parallel to RFID antenna 10 and connected to output connections 11 and 12 of matching circuit 8. Matching circuit 8 transforms the filtered transmitter signal of the electromagnetic interference filter 5 into the antenna signal with a substantial sinusoidal current I with the carrier frequency of RFID antenna 10 to output maximal power into the magnetic field HF to be received by the tag. The Ohmic resistance 9 forms the load resistor and generates a substantial sinusoidal voltage U of the antenna signal for RFID antenna 10.

Drawback of this known transmitter is that the electromagnetic interference filter 5 requires a corner frequency close to the carrier frequency of for instance 13.56MHz to reduce the harmonics so that a largely sinusoidal antenna signal is provided at the RFID antenna 10 of the transmitter. The carrier frequency for NFC and the corner frequency of the electromagnetic interference filter 5 are closely spaced. Thus the poles of the electromagnetic interference filter 5 and the RFID antenna 10 interact since the RFID antenna 10 is a tuned load connected to the electromagnetic interference filter 5. The inductance and therefore resonant frequency of the RFID antenna 10 is affected by the presence of other objects moving in the proximity field. For applications like NFC wireless charging, objects to be charged have to be moved in the proximity field so this is a normal occurrence. The change in resonance of the RFID antenna 10 causes fluctuation in the output power after the electromagnetic interference filter 5 due to changes of the impedance of the matching circuit 8. This fluctuation in the output power is a substantial dissadvantage in particular for applications like NFC based wireless charging applications.

Document EP 3 182 585 B1 discloses a transmitter using a power amplifier that generates and provides a sinusoidal antenna signal using a number of driver blocks. Each driver block comprises a capacitor that provides increments of output current that add-up to a sinusoidal antenna signal without the need of an electromagnetic interference filter to cut-off harmonics of the carrier frequency of the antenna signal. Figure 2 shows the transmission part of a high-voltage digital power amplifier 13 of such a state of the art transmitter that comprises an integrated circuit IC2 that processes digital data to be transmitted to a reader or tag. A matching circuit 14 of discrete components connected to a first transmission output pin 15 and a second transmission output pin 16 is built to influence output signal 17 of the integrated circuit IC2 and feed a substantial sinusoidal output current I with a carrier frequency to RFID antenna 10. Matching circuit 14 comprises a first resonance capacitor C2a connected with its first contact to the first transmission output pin 15 and a second resonance capacitor C2b connected with its first contact to the second transmission output pin 16 and both resonance capacitors C2a and C2b are connected with their second contacts to a ground pin 18 of the integrated circuit IC2. The resonance capacitors C2a and C2b are tuned to build a resonance system together with the output impedance of the integrated circuit IC2 at the first and second transmission output pins 15 and 16 and the impedance of the parallel connected Ohmic resistance 9 and RFID antenna 10 to resonate at the carrier frequency of 13.56 MHz.

Drawback of this known transmitter used for wireless charging applications is that the power consumption of the power amplifier is higher compared to the power consumption of the other described known transmitter due to the switched capacitor losses in the driver blocks.

Document US 2007/123184 A1 discloses a transmitter built to drive an RFID antenna. A power amplifier is built to amplify a transmitter signal provided by a transmitter source, the signal processor comprising signal separating means for separating an input signal into first and second processing paths, the first processing path comprising signal envelope processing means for generating a pulse train signal being a digitised envelope signal, and the second processing path comprising phase processing means operable to generate a constant envelope phase signal, and further comprising an RF switch operable to switch said phase signal by means of said pulse train signal.However, document US 2007/123184 A1 uses a pulse- width modulated signal and fails to disclose pulse density modulation.

Document WO 2007/085788 A1 relates to the control of amplifiers, for example power amplifiers for high-power amplification of signals to be transmitted from radio transmitters. The input to the amplifier that controls the degree of amplification to be applied is a signal of a pulse density modulated form. The radio transmitter in document WO 2007/085788 A1 can be a wireless headset or a wireless LAN transceiver both of which work in a GHz frequency range and not 100kHz to 100MHz. Furthermore, in document WO 2007/085788 A1, the filter is provided before the power amplifier and not after. Finally, it is not specified in document WO 2007/085788 A1 that a matching circuit is connected to the electromagnetic interference filter and the RFID antenna and built to match their impedances and built to receive the filtered transmitter signal and built to provide the antenna signal to the RFID antenna.

### SUMMARY OF THE INVENTION

It is an object of the invention to provide a method and transmitter built to drive an RFID antenna of the transmitter with an antenna signal with a substantial sinusoidal current and a carrier frequency in the RFID frequency range of 100kHz to 100MHz and to provide a system with such a transmitter that does not comprise such drawbacks of known transmitters and methods.

This object is achieved with a transmitter as claimed in claim 1 and a system as claimed in claim 7 and a method as claimed in claim 8.

Pulse density modulation has not been used so far in the RFID frequency area as a person skilled in the art of the RFID technology disregarded to use it due to the very large number of pulses to enable high oversampling rations and a high purity sinwave. Each pulse is a short square wave that causes noise and it is the aim of RFID technology to minimize noise to maximize the communication distance between a transmitter and a receiver. The inventors of this invention disregarded this prejudice and found out that the use of pulse density modulation to generate a transmitter signal enables advantages in the stability of wireless power transferred from the transmitter to the receiver that in particular is of essence for the application of wireless charging. Wireless communication between the transmitter and the receiver is still possible, even in the presence of higher noise caused by the pulse density modulation, if short distances of for instance only 5 or 10 millimeters between the transmitter and the receiver are required. For other applications with a high need of stable wireless power transfer and less importance of communication distances of more than 1 or 2 centimeters, the use of pulse density modulation will be advantageous as well.

In one embodiment of the invention the pulse density modulated signal is provided by a transmitter signal source, which comprises a sampling stage built to provide a pulse code modulated sinusoid signal with a sample rate of at least 32 times the carrier frequency of the antenna signal. Lower sample rates are possible, but advantageous sample rates are 32 times and higher to sample the carrier frequency, because the higher the sample rate the better a waveform accuracy towards a perfect sinusoid signal may be achieved. A delta-sigma modulator may be used to process the high resolution pulse code modulated sinusoid signal of the sampling stage into a low resolution pulse density modulated signal to realize the transmitter signal. This provides the advantage that the noise caused by the pulse density modulation is moved towards frequencies far away from the carrier frequency of for instance 13.56 MHz which substantially eases the filtering by the electromagnetic interference filter as its corner frequency is significantly higher than the carrier frequency.

In another embodiment of the invention the pulse density modulated signal is provided by a transmitter signal source which comprises a memory built to store a lookup table of at least one cycle of the pulse density modulated signal. This transmitter signal source furthermore comprises a signal loop reproducer built to provide the stored pulse density modulated signal in a loop continuously to provide the transmitter signal to the power amplifier. This enables the advantage that the influence of the lower harmonics of the carrier signal (notably the 3^{rd} and 5^{th} harmonic) may already be reduced or removed in the pulse density modulated signal stored in the memory. With this approach of the stored lookup table the delta-sigma modulator may be omitted.

These and other aspects of the invention will be apparent from and elucidated with reference to the embodiments described hereinafter. The person skilled in the art will understand that various embodiments may be combined.

### BRIEF DESCRIPTION OF THE DRAWINGS

Figure 1 shows a high-voltage digital power amplifier of a transmitter according to the state of the art that uses a square wave as transmitter signal to generate a substantial sinusoidal current for an RFID antenna.
Figure 2 shows another transmitter according to the state of the art that uses a number of driver blocks with capacitors to add-up their current increments to a substantial sinusoidal current for an RFID antenna.
Figure 3 shows a transmitter according to a first embodiment of the invention with a delta-sigma modulator.
Figures 4 to 7 show signals processed in the transmitter according to figure 3.
Figure 8 shows a comparison of signals.
Figure 9 shows a transmitter according to a second embodiment of the invention with a stored lookup table of one cycle of the pulse density modulated signal.

### DETAILED DESCRIPTION OF EMBODIMENTS

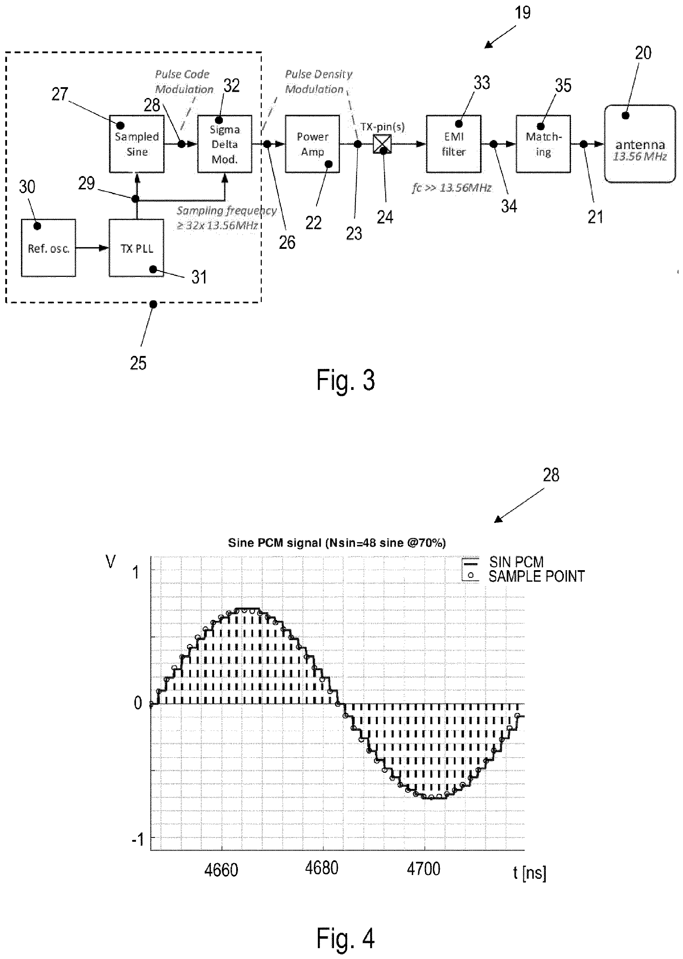

Figure 3 shows a transmitter 19 according to a first embodiment of the invention, which transmitter 19 together with a receiver is part of a system built to be used in a wireless NFC charging application. The receiver for instance may be in-ear headset with batteries, which are wirelessly loaded via a magnetic field generated by the transmitter 19 with a carrier frequency of 13.56 MHz. The transmitter 19 comprises an RFID antenna 20 and is built to drive the RFID antenna 20 with an antenna signal 21 with a substantial sinusoidal current and the carrier frequency of 13.56 MHz in the RFID frequency range of 100kHz to 100MHz. Other embodiments of the invention may use a carrier frequency of for instance 125 kHz or 900 MHz. In principle the invention could be used with higher RFID frequencies like 1 GHz as well, but this would make sampling frequencies of 150GHz necessary, which in fact is not practical.

Transmitter 19 comprises a power amplifier 22 realized within an integrated circuit in C-MOS technology and built to provide an amplified transmitter signal 23 at two output pins 24 of the integrated circuit. Power amplifier 22 is a digital class-C amplifier and in a simple form it is a powerful CMOS inverter driving by a "trumpet buffer" consisting of a chain of inverters of increasing drive strength. Transmitter 19 furthermore comprises a transmitter signal source 25 connected to the power amplifier 22 and built to provide a pulse density modulated signal to realize the transmitter signal 26 for the power amplifier 22.

The transmitter signal source 25 comprises a sampling stage 27 built to provide a pulse code modulated sinusoid signal 28 with a sample rate of at least 32 times the carrier frequency of the antenna signal 21. To achieve that sampling stage 27 provides a stored sinus signal with the carrier frequency of 13.56 MHz which is sampled with a sampling signal 29 and the fixed sample rate of 48 times the carrier frequency and such pulse code modulated sinusoid signal 28 is shown in figure 4. Lower sample rates are possible, but advantageous sample rates are 32 times and higher to sample the sinus signal with the carrier frequency, because the higher the sample rate the better a waveform accuracy towards a perfect sinusoid signal may be achieved. To generate the sampling signal 29 the transmitter signal source 25 comprises a reference oscillator 30, that consists of a crystal oscillator generating a frequency in the range of 10-60 MHz as defined by the oscillating mode of the quartz crystal deployed. A transmitter PLL 31 of the transmitter signal source 25 consists of a phase detector, loop filter, voltage-controlled oscillator (VCO) and feedback divider as known to a person skilled in the art. It translates the frequency from the reference oscillator 30 to the appropriate frequency of the sampling signal 29 and the carrier frequency.

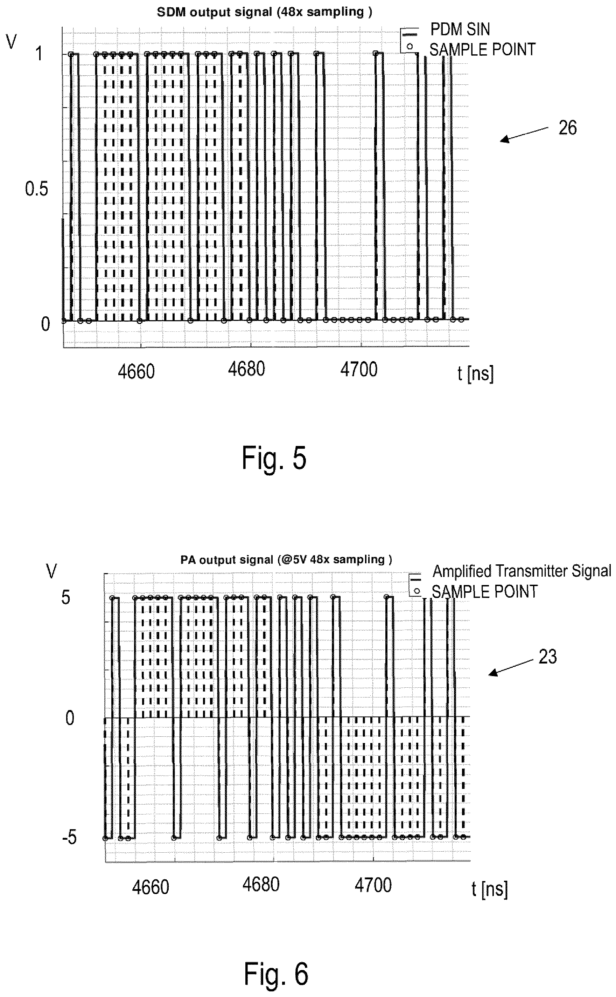

The transmitter signal source 25 furthermore comprises a delta-sigma modulator 32 connected to the sampling stage 27 and the power amplifier 22 and the delta-sigma modulator 32 is built to receive the pulse code modulated sinusoid signal 28 and is built to provide the transmitter signal 26. The delta-sigma modulator 32 is used to process the high resolution pulse code modulated sinusoid signal 28 of the sampling stage 27 into a low resolution pulse density modulated signal to realize the transmitter signal 26. Figure 5 shows such transmitter signal 26 provided by delta-sigma modulator 32 and figure 6 shows the amplified transmitter signal 23 of the differential power amplifier 22 at a 5 Volt supply. This embodiment with the delta-sigma modulator 32 provides the advantage that the noise caused by the pulse density modulation is moved towards frequencies far away from the carrier frequency of 13.56 MHz which substantially eases the filtering of the amplified transmitter signal 23 by an electromagnetic interference filter 33 as its corner frequency is significantly higher than the carrier frequency.

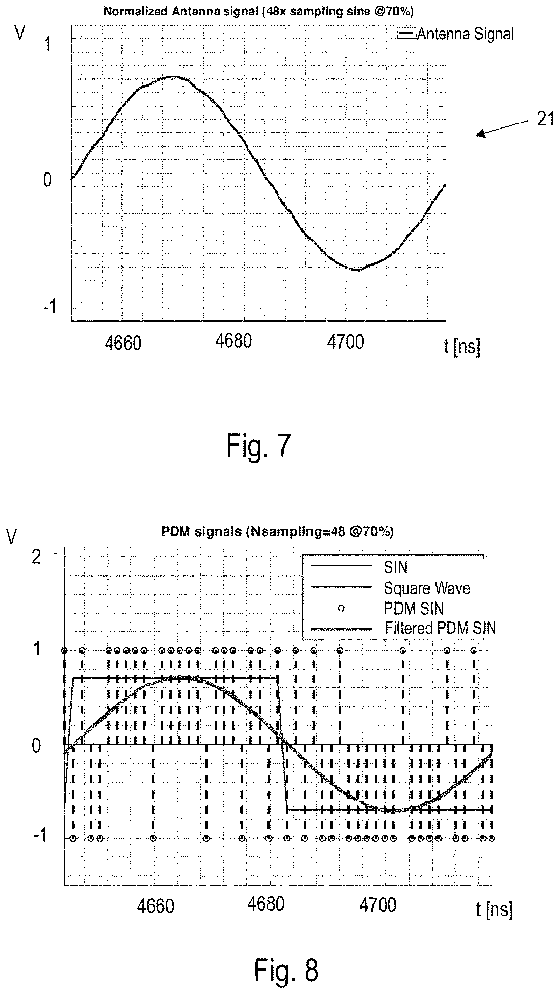

Electromagnetic interference filter 33 is built to provide a filtered transmitter signal 34 to a matching circuit 35 connected to the electromagnetic interference filter 33 and the RFID antenna 20. Matching circuit 35 is built to match the output impedance of the electromagnetic interference filter 33 with the input impedance of the RFID antenna 20 to transfer as much as possible energy from the received filtered transmitter signal 34 into the antenna signal 21 fed into the RFID antenna 20. Depending on the power needs of the receiver a resonant or slightly out of resonance system is tuned with RFID antenna 20 as known to a person skilled in the art. Figure 7 shows the substantial sinusoidal voltage of antenna signal 21 as generated and provided by transmitter 19 to provide the magnetic field for the receiver to enable wireless charging.

Transmitter 19 as disclosed in the figure 3 enables a higher energy transfer efficiency than current approaches, which is in particular important for NFC based wireless charging. Lower loss in the electromagnetic interference filter is achieved than legacy square wave approaches due to higher deployed cutoff frequency meaning smaller inductors with less I2R loss. Furthermore, lower power consumption compared to switched capacitor power amplifiers, because there is no capacitor charging loss. Furthermore, smaller die area and therefore lower die cost are achieved than with direct sinus synthesis, because no internally fabricated switched capacitors are needed.

This approach furthermore allows a trade-off between the losses of the electromagnetic interference filter and internal driver losses allowing highest efficiency over a wide range of output powers. It is advantageous for higher power solutions to use a higher oversampling rate to reduce losses of the electromagnetic interference filter. It is advantageous for lower power solutions to use a lower oversampling rate to reduce driver losses.

Unlike legacy square wave approach, pulse density modulation can vary output amplitude to achieve modulation required for NFC communication.

The legacy square wave approach requires an electromagnetic interference filter with filter poles close to the resonant frequency of the antenna. Thus the poles of the electromagnetic interference filter and the RFID antenna interact since the RFID antenna is a tuned load connected to the electromagnetic interference filter. The inductance and therefore resonant frequency of the RFID antenna is affected by the presence of other objects moving in the proximity field. NFC wireless charging relies on objects to be charged that are in the proximity field so this is a normal occurrence. The change in resonance of the RFID antenna causes fluctuation in the output power after the electromagnetic interference filter due to changes in matching impedance. Moving the electromagnetic interference filter poles to a higher frequency, as is possible when using pulse density modulation, reduces power fluctuations in NFC based wireless charging applications allowing antenna systems to cope better with misalignments.

The use of the delta-sigma modulation spreads noise from the power supply resulting in PSRR improvement over both square wave and direct sin wave TX approaches.

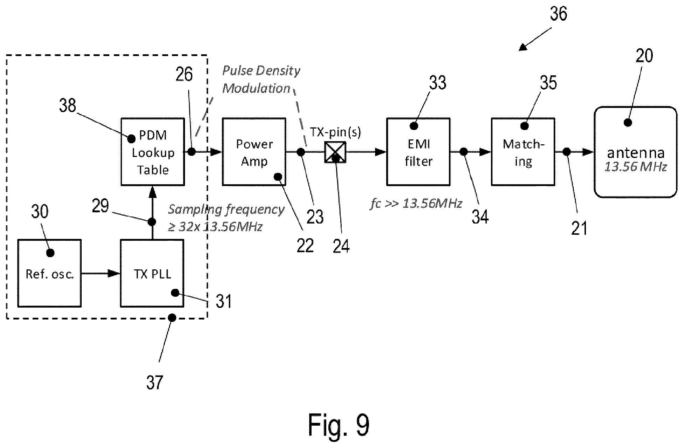

Figure 9 shows a transmitter 36, according to a second embodiment of the invention, with a stored lookup table of one cycle of the pulse density modulated signal as transmitter signal 26. Those stages of the second embodiment that are similar or ident to those stages of the first embodiment shown in figure 3 are referred to with the same reference numbers. Transmitter 36 is different to transmitter 19 as it comprises a different transmitter signal source 37 to provide the transmitter signal 26. Transmitter signal source 37 comprises a lookup table stage 38 with a memory, built to store a lookup table of one cycle of the pulse density modulated signal, and with a signal loop reproducer, built to provide the stored pulse density modulated signal in a loop continuously as transmitter signal 26 to the power amplifier 22. One of the advantages of this approach is, that the effect of the lower harmonics of the carrier frequency, notably the 3^{rd} and 5^{th} harmonic, may already been reduced or removed in the stored pulse density modulated signal. This reduces the need for filtering and filtering losses in the electromagnetic interference filter 33. A person skilled in the art knows how to store such a pulse density modulated signal in the appropriate way as digital data in the memory and a person skilled in the art knows how to realize such a signal loop reproducer that in a loop reads out the stored data/signal and provides it as transmitter signal 26.

Both above described transmitter 19 and 36 realize a method to drive the RFID antenna 20 of the transmitter 19 or 36 with the antenna signal 21 with a substantial sinusoidal current with a carrier frequency in the RFID frequency range of 100kHz to 100MHz, which method comprises the following steps:
- Generate the transmitter signal 26 and amplify it to provide the amplified transmitter signal 23;
- Filter the amplified transmitter signal 23 with an electromagnetic interference filter 33 and provide the filtered transmitter signal 34;
- Match the impedances of the RFID antenna 20 and the electromagnetic interference filter 33 at its output with the matching circuit 35 and drive the RFID antenna 20 in resonance;
- Use a pulse density modulated signal to generate the transmitter signal 26.

The use of above method and the use of a system with such a transmitter 19 or 36 and a receive to wirelessly charge a battery of the receiver comprise the advantages as described above for the two different embodiments of the transmitters 19 and 36.

## Claims

1. Transmitter (19; 36) built to drive an RFID antenna (20) of the transmitter (19; 36) with an antenna signal (21) with a substantial sinusoidal current/voltage and a carrier frequency in the RFID frequency range of 100kHz to 100MHz, which transmitter (19; 36) comprises:
a power amplifier (22) built to provide an amplified transmitter signal (23) and
an electromagnetic interference filter (33) built to filter the amplified transmitter signal (23) and built to provide a filtered transmitter signal (34) and
a matching circuit (35) connected to the electromagnetic interference filter (33) and the RFID antenna (20) and built to match their impedances and built to receive the filtered transmitter signal (34) and built to provide the antenna signal (21) to the RFID antenna (20),
**characterized in that**
the transmitter (19; 36) comprises a transmitter signal source (25; 37) connected to the power amplifier (22) and built to provide a pulse density modulated signal as transmitter signal (26) to the power amplifier (22).

2. Transmitter (19) according to claim 1, **characterized in that** the transmitter signal source (25) comprises a sampling stage (27) built to provide a pulse code modulated sinusoid signal (28) with a sample rate of at least 32 times the carrier frequency of the antenna signal (21).

3. Transmitter (19) according to claim 2, **characterized in that** the transmitter signal source (25) comprises a delta-sigma modulator (32) connected to the sampling stage (27) and the power amplifier (22) and built to receive the pulse code modulated sinusoid signal (28) and built to provide the transmitter signal (26).

4. Transmitter (19) according to claim 3, **characterized in that** the delta-sigma modulator (32) is used to transform the high resolution pulse code modulated sinusoid signal (28) into a low resolution transmitter signal (26).

5. Transmitter (19) according to claim 3 or 4, **characterized in that** delta-sigma modulator (32) is realized as second order delta-sigma modulator or as higher than second order delta-sigma modulator.

6. Transmitter (36) according to claim 1, **characterized in that** the transmitter signal source (37) comprises a memory built to store a lookup table of one cycle of the pulse density modulated signal and that the transmitter signal source (37) comprises a signal loop reproducer built to provide the stored pulse density modulated signal in a loop continuously as transmitter signal (26) to the power amplifier (22).

7. System of a transmitter (19; 36) and a receiver to wireless charge a battery of the receiver with power transmitted with an RFID antenna (20) of the transmitter (19; 36) and received with an RFID antenna of the receiver, **characterized in that** the transmitter (19; 36) is realized as the transmitter (19; 36) claimed in one of the claims 1 to 6.

8. Method to drive an RFID antenna (20) of a transmitter (19, 36) according to claims 1 to 6, with an antenna signal (21) with a substantial sinusoidal current with a carrier frequency in the RFID frequency range of 100kHz to 5GHz, which method comprises the following steps:
- Generate a transmitter signal (26) and amplify it to provide an amplified transmitter signal (23);
- Filter the amplified transmitter signal (23) with an electromagnetic interference filter (33) and provide a filtered transmitter signal (34);
- Match the impedances of the RFID antenna (20) and the electromagnetic interference filter (33) at its output with a matching circuit (35) and drive the RFID antenna (20) in resonance, **characterized by** the following step:
- Use a pulse density modulated signal to generate the transmitter signal (26).

## Patentansprüche

1. Sender (19; 36) zum Ansteuern einer RFID-Antenne (20) des Senders (19; 36) mit einem Antennensignal (21) mit einem im Wesentlichen sinusförmigen Strom/Spannung und einer Trägerfrequenz im RFID-Frequenzbereich von 100 kHz bis 100 MHz, wobei der Sender (19; 36) folgendes umfasst:
einen Leistungsverstärker (22), der dazu ausgelegt ist, ein verstärktes Sendersignal (23) bereitzustellen, und
einen elektromagnetischen Interferenzfilter (33), der so ausgelegt ist, dass er das verstärkte Sendersignal (23) filtert und ein gefiltertes Sendersignal (34) liefert, und
eine Anpassungsschaltung (35), die mit dem elektromagnetischen Interferenzfilter (33) und der RFID-Antenne (20) verbunden ist und dazu ausgelegt ist, deren Impedanzen anzupassen,
und dazu ausgelegt ist, das gefilterte Sendersignal (34) zu empfangen und dazu ausgelegt ist,
das Antennensignal (21) an die RFID-Antenne (20) zu liefern, **dadurch gekennzeichnet, dass** der Sender (19; 36) eine Sendersignalquelle (25; 37) umfasst, die mit dem Leistungsverstärker (22) verbunden ist und dazu ausgelegt ist, ein pulsdichtemoduliertes Signal als Sendersignal (26) an den Leistungsverstärker (22) zu liefern.

2. Sender (19) nach Anspruch 1, **dadurch gekennzeichnet, dass** die Sendersignalquelle (25) eine Abtaststufe (27) umfasst, die so aufgebaut ist, dass sie ein puls-code-moduliertes Sinussignal (28) mit einer Abtastrate von mindestens dem 32-fachen der Trägerfrequenz des Antennensignals (21) liefert.

3. Sender (19) nach Anspruch 2, **dadurch gekennzeichnet, dass** die Sendersignalquelle (25) einen Delta-Sigma-Modulator (32) umfasst, der mit der Abtaststufe (27) und dem Leistungsverstärker (22) verbunden ist und so aufgebaut ist, dass er das puls-code-modulierte Sinussignal (28) empfängt und das Sendersignal (26) liefert.

4. Sender (19) nach Anspruch 3, **dadurch gekennzeichnet, dass** der Delta-Sigma-Modulator (32) dazu verwendet wird, das hochauflösende puls-code-modulierte Sinussignal (28) in ein niedrigauflösendes Sendersignal (26) umzuwandeln.

5. Sender (19) nach Anspruch 3 oder 4, **dadurch gekennzeichnet, dass** der Delta-Sigma-Modulator (32) als Delta-Sigma-Modulator zweiter Ordnung oder als Delta-Sigma-Modulator höherer Ordnung als zweiter Ordnung realisiert ist.

6. Sender (36) gemäß Anspruch 1, **dadurch gekennzeichnet, dass** die Sendersignalquelle (37) einen Speicher umfasst, der zum Speichern einer Nachschlagetabelle eines Zyklus des pulsdichtemodulierten Signals aufgebaut ist, und dass die Sendersignalquelle (37) einen Signalkreiswiedergeber umfasst, der zum Bereitstellen des gespeicherten pulsdichtemodulierten Signals in einem Kreis kontinuierlich als Sendersignal (26) an den Leistungsverstärker (22) aufgebaut ist.

7. System aus einem Sender (19; 36) und einem Empfänger zum drahtlosen Laden einer Batterie des Empfängers mit Energie, die mit einer RFID-Antenne (20) des Senders (19; 36) gesendet und mit einer RFID-Antenne des Empfängers empfangen wird, **dadurch gekennzeichnet, dass** der Sender (19; 36) als der Sender (19; 36) nach einem der Ansprüche 1 bis 6 realisiert ist.

8. Verfahren zum Ansteuern einer RFID-Antenne (20) eines Senders (19, 36) gemäß den Ansprüchen 1 bis 6 mit einem Antennensignal (21) mit einem im Wesentlichen sinusförmigen Strom mit einer Trägerfrequenz im RFID-Frequenzbereich von 100 kHz bis 5 GHz, wobei das Verfahren die folgenden Schritte umfasst:
Erzeugen eines Sendersignals (26) und Verstärken desselben, um ein verstärktes Sendersignal (23) bereitzustellen;
Filtern des verstärkten Sendersignals (23) mit einem elektromagnetischen Interferenzfilter (33) und Bereitstellen eines gefilterten Sendersignals (34);
Anpassen der Impedanzen der RFID-Antenne (20) und des elektromagnetischen Interferenzfilters (33) an dessen Ausgang mit einer Anpassungsschaltung (35) und
Ansteuern der RFID-Antenne (20) in Resonanz, **gekennzeichnet durch** den folgenden Schritt:
Verwenden eines pulsdichtemodulierten Signals, um das Sendersignal (26) zu erzeugen.

## Revendications

1. Émetteur (19; 36) conçu pour piloter une antenne RFID (20) de l'émetteur (19; 36) avec un signal d'antenne (21) avec un courant/tension sinusoïdal(e) important(e) et une fréquence porteuse comprise dans la gamme de fréquences RFID de 100 kHz à 100 MHz, l'émetteur (19; 36) comprenant:
un amplificateur de puissance (22) conçu pour fournir un signal d'émission amplifié (23), et
un filtre d'interférence électromagnétique (33) conçu pour filtrer le signal d'émission amplifié (23) et conçu pour fournir un signal d'émission filtré (34), et
un circuit d'adaptation (35) relié au filtre d'interférence électromagnétique (33) et à l'antenne RFID (20) et conçu pour adapter leurs impédances et conçu pour recevoir le signal d'émission filtré (34) et conçu pour fournir le signal d'antenne (21) à l'antenne RFID (20),
**caractérisé en ce que**
l'émetteur (19; 36) comprend une source de signal d'émission (25; 37) reliée à l'amplificateur de puissance (22) et conçue pour fournir un signal modulé en densité d'impulsions sous forme de signal d'émission (26) à l'amplificateur de puissance (22).

2. Émetteur (19) selon la revendication 1, **caractérisé en ce que** la source de signal d'émission (25) comprend un étage d'échantillonnage (27) conçu pour fournir un signal sinusoïdal modulé par impulsions et codage (28) avec une fréquence d'échantillonnage d'au moins 32 fois la fréquence porteuse du signal d'antenne (21).

3. Émetteur (19) selon la revendication 2, **caractérisé en ce que** la source de signal d'émission (25) comprend un modulateur delta-sigma (32) relié à l'étage d'échantillonnage (27) et à l'amplificateur de puissance (22) et conçu pour recevoir le signal sinusoïdal modulé par impulsions et codage (28) et conçu pour fournir le signal d'émission (26).

4. Émetteur (19) selon la revendication 3, **caractérisé en ce que** le modulateur delta-sigma (32) est utilisé pour transformer le signal sinusoïdal modulé par impulsions et codage à haute résolution (28) en un signal d'émission à basse résolution (26).

5. Émetteur (19) selon la revendication 3 ou 4, **caractérisé en ce que** le modulateur delta-sigma (32) est réalisé en tant que modulateur delta-sigma du second ordre ou en tant que modulateur delta-sigma d'ordre supérieur au second.

6. Émetteur (36) selon la revendication 1, **caractérisé en ce que** la source de signal d'émission (37) comprend une mémoire conçue pour stocker une table de recherche d'un cycle du signal modulé en densité d'impulsions et la source de signal d'émission (37) comprend un reproducteur de boucle de signal conçu pour fournir continuellement, dans une boucle, le signal modulé en densité d'impulsions stocké sous forme de signal d'émission (26) à l'amplificateur de puissance (22).

7. Système d'un émetteur (19; 36) et d'un récepteur pour la charge sans fil d'une batterie du récepteur avec l'énergie transmise à l'aide d'une antenne RFID (20) de l'émetteur (19; 36) et reçue à l'aide d'une antenne RFID du récepteur, **caractérisé en ce que** l'émetteur (19; 36) est réalisé en tant que l'émetteur (19; 36) selon l'une des revendications 1 à 6.

8. Procédé de pilotage d'une antenne RFID (20) d'un émetteur (19; 36) selon les revendications 1 à 6, avec un signal d'antenne (21) avec un courant sinusoïdal important ayant une fréquence porteuse comprise dans la gamme de fréquences RFID de 100 kHz à 5 GHz, le procédé comprenant les étapes suivantes:
- générer un signal d'émission (26) et l'amplifier pour fournir un signal d'émission amplifié (23);
- filtrer le signal d'émission amplifié (23) à l'aide d'un filtre d'interférence électromagnétique (33) et fournir un signal d'émission filtré (34);
- adapter les impédances de l'antenne RFID (20) et du filtre d'interférence électromagnétique (33) à sa sortie avec un circuit d'adaptation (35) et amener l'antenne RFID (20) en résonance,
**caractérisé par** l'étape suivante:
- utiliser un signal modulé en densité d'impulsions pour générer le signal d'émission (26).
